# DEMANDE DE BREVET EUROPEEN

(11) **EP 4 445 990 A2**
(43) Date de publication de la demande: **16.10.2024**
(21) Numéro de dépôt: 24185985.9
(22) Date de dépôt: 18.10.2019
(51) Int. Cl.: B01D 53/72

(54) **PROCEDE DE TRAITEMENT D'UN EFFLUENT GAZEUX ISSU D'UNE DECOMPOSITION PYROLYTIQUE D'UN POLYMERE**

(30) Priorité: 18.10.2018 FR 1859659
(62) Demande divisionnaire de: 19824375.0
(71) Demandeur: ARKEMA FRANCE, 92700 Colombes (FR); Pyrovac, Quebec, G1T 2M4 (CA)
(72) Inventeur: DUBOIS, Jean-Luc, 92705 COLOMBES CEDEX (FR); DE CAUMIA, Bruno, STONEHAM-ET-TEWKESBURY, G3COY9 (CA); BLANCHETTE, Daniel, LEVIS, G6Z7A4 (CA); ROY, Christian, QUEBEC, G1T2M4 (CA)
(74) Mandataire: Arkema Patent

(57) **Abrégé**

L'invention concerne un procédé de traitement d'un effluent gazeux issu d'une décomposition pyrolytique d'un ou plusieurs polymères, caractérisé en ce qu'il comprend :
- une étape de condensation (210), dans une enceinte de condensation (110) maintenue sous une première pression, d'un effluent gazeux mis au contact d'un liquide absorbant, la température dudit liquide absorbant étant inférieure à la température de l'effluent gazeux,
- une étape de vaporisation partielle (230), par détente du condensat dans une enceinte (130) maintenue sous une deuxième pression, inférieure à la première pression,
- une étape de réinjection (240) consistant à rediriger, au moins en partie, une première fraction liquide ou vapeur obtenue à l'issue de l'étape de vaporisation partielle (230) vers l'enceinte de condensation (110), et
- une étape de récupération (250) comportant une purification d'une seconde fraction liquide ou vapeur obtenue à l'issue de l'étape de vaporisation partielle (230) et chargée en monomère(s).

## Description

### [Domaine de l'invention]

La présente invention concerne le domaine du traitement des effluents gazeux issus de la décomposition de polymère(s).

Plus particulièrement, l'invention se rapporte à un procédé de traitement d'un gaz issu d'une décomposition pyrolytique d'un polymère ou d'un mélange de polymères. Ce procédé trouve son application dans le recyclage de plastiques et de résidus de plastiques comprenant en général plusieurs polymères de grade différents et en particulier dans le recyclage de composés polymères comprenant une seule famille de polymères.

### [Art antérieur]

En 2017, des centaines de millions de tonnes de plastiques ont été mondialement produites. Ainsi, la production et le recyclage des plastiques apparaissent aisément comme des enjeux majeurs d'un point de vue environnemental et économique. Il est donc intéressant économiquement et d'un point de vue environnemental de pouvoir dépolymériser et/ou craquer la résine polymérique et obtenir des produits qui puissent être réutilisés. Parmi les méthodes classiques de recyclage des matières plastiques, la pyrolyse thermique et le recyclage mécanique sont les plus employées.

La pyrolyse thermique consiste à placer l'objet en plastique à traiter dans une chambre adéquate puis à chauffer la chambre afin que la chaleur soit transférée à l'objet. Elle permet de traiter les déchets plastiques et conduit généralement à des résidus charbonneux, de l'huile et des gaz qui ne peuvent pas être réutilisés tels quels pour la production de matrice en polymère thermoplastique. De tels procédés de décomposition thermique sont notamment utilisés pour décomposer du PMMA (polyméthacrylate de méthyle), du polystyrène ou d'autres résidus plastiques. Dans le cas de la décomposition thermique du PMMA ou du polystyrène, il serait intéressant de pouvoir récupérer les monomères. Dans le cas de la décomposition thermique de résidus plastiques, il est possible de récupérer un mélange de produits, utilisable comme carburant ou fuel. La fraction de coeur de la pyrolyse des polyoléfines est par exemple riche en une coupe de type naphta (essence de pyrolyse), qui peut avantageusement être utilisée pour alimenter un vapocraqueur (unité classique de la pétrochimie) afin de produire à nouveau des oléfines. En général, les effluents gazeux issus de cette décomposition thermique par pyrolyse de polymère(s) sont riches en composé(s) que l'on souhaite récupérer et recycler.

Pour isoler et récupérer les composés (e.g. le (s) monomère(s)) l'effluent gazeux doit être condensé. Pour cela, on utilise classiquement un échangeur de chaleur dans lequel l'effluent gazeux va circuler, de manière à ce que l'échangeur de chaleur refroidisse l'effluent gazeux jusqu'à produire une fraction liquide.

Le produit récupéré à l'issue de cette condensation est de qualité relativement médiocre et nécessite des étapes ultérieures de lavage puis de purification par distillation.

L'effluent gazeux issu de la décomposition thermique du (des) polymère(s) est composé de fractions molaires légères, moyennes et lourdes. Le(s) monomère(s) que l'on cherche à récupérer et à valoriser se trouve(nt) essentiellement présent(s) dans la fraction molaire moyenne. Le demandeur a donc cherché une solution qui permette d'isoler plus efficacement cette fraction molaire d'intérêt.

Le document WO 2017/179009 décrit un procédé et un système de séparation des hydrocarbures en C3 d'un mélange gazeux. La séparation des composants dans ce système est selon leur point d'ébullition, donc le procédé et le système correspondent à une colonne de distillation.

Le document US 2016/145185 décrit une procédé de récupération d'acide (meth)acrylique épuré lors de la synthèse de l'acide (meth) acrylique. Le document décrit une étape de purification d'un composé lors de son procédé de synthèse et du chauffage des colonnes de distillation.

Le document US2003/028052 décrit un procédé pour absorber et purifier l'acide acrylique. Le procédé utilise des colonnes de distillation.

### [Problème technique]

L'invention a donc pour but de remédier à au moins un des inconvénients précités de l'art antérieur.

L'invention vise notamment à proposer une solution simple et efficace pour isoler une fraction molaire d'intérêt d'un effluent gazeux issu de la décomposition thermique d'un polymère ou d'un mélange de polymère(s), afin de récupérer un ou plusieurs composé(s) (e.g. monomère(s)) de qualité améliorée.

### [Brève description de l'invention]

A cet effet, l'invention a pour objet un procédé de traitement d'un effluent gazeux issu d'une décomposition pyrolytique d'un polymère ou d'un mélange de polymères, permettant de récupérer un ou plusieurs monomère(s) contenu(s) dans ledit effluent gazeux, ledit procédé étant caractérisé en ce qu'il comprend les étapes suivantes :
- une étape de condensation consistant à injecter, dans une enceinte de condensation maintenue sous une première pression p₁, l'effluent gazeux et à le mettre au contact d'un liquide absorbant, la température dudit liquide absorbant étant inférieure à la température de l'effluent gazeux, afin que le(s)dit(s) monomère(s) se condense(nt) dans le liquide absorbant par échange thermique,
- une étape de vaporisation partielle du condensat obtenu à l'issue de l'étape de condensation, par détente du condensat dans une enceinte maintenue sous une deuxième pression p₂, inférieure à la première pression p₁,
- une étape de réinjection consistant à rediriger, au moins en partie, une première fraction, liquide ou vapeur, obtenue à l'issue de l'étape de vaporisation partielle vers l'enceinte de condensation pour absorber à nouveau le(s) monomère(s) contenu dans l'effluent gazeux, de préférence le cas échéant la fraction vapeur est recondensée avant son introduction dans l'enceinte de condensation, et
- une étape de récupération comportant une purification d'une seconde fraction, liquide ou vapeur, obtenue à l'issue de l'étape de vaporisation partielle et chargée en monomère(s).

Ainsi, il a été découvert que la condensation, au moyen d'un dispositif d'absorption permettant de mettre en contact l'effluent gazeux avec un liquide absorbant dont la température est bien inférieure à celle de l'effluent, suivie de la vaporisation partielle du condensat obtenu en présence notamment d'un différentiel de pression, permet d'isoler efficacement le(s) monomère(s) contenu(s) dans l'effluent gazeux issu de la décomposition d'un ou plusieurs polymères.

**Selon d'autres caractéristiques optionnelles du procédé :**
- lors de l'étape de réinjection, la première fraction réinjectée est une fraction liquide et lors de l'étape de récupération, la seconde fraction récupérée est une fraction vapeur ;
- le liquide absorbant est sélectionné de sorte que le rapport entre sa chaleur latente de vaporisation ΔHv à l'état standard et sa chaleur spécifique molaire Cp à l'état standard soit supérieur à celui du(des) monomère(s) à récupérer ;
- le liquide absorbant est choisi parmi l'un des composés suivants : le benzène, le benzonitrile, un composé de formule R-COOH, et un composé de formule R-OH, dans lesquels R peut être choisi parmi des alkyles, dont le nombre de carbone est compris entre 1 et 5, un phényl ou un hydrogène ;
- le liquide absorbant est choisi de sorte que son point d'ébullition soit de l'ordre de grandeur de celui du(des) monomère(s) à récupérer ± 80°C, de façon préférée ± 50°C, de façon plus préférée ± 30°C et de façon encore plus préférée ± 10°C ;
- le liquide absorbant présente un point d'ébullition supérieur ou sensiblement égal à celui du ou des monomères à récupérer et/ou de l'azéotrope qu'il forme avec le ou les monomères à récupérer ;
- le polymère est sélectionné parmi : les polyéthylènes comme le polyéthylène haute densité (PEHD) ou le polyéthylène téréphtalate (PET) ; d'un homo- et copolymère d'oléfines tels que les copolymères acrylonitrile-butadiène-styrène, les copolymères styrène-butadiène-méthacrylate d'alkyle (ou SBM) ; le polypropylène, le polybutadiène et le polybutylène; les homo- et copolymères acryliques et les polyméthacrylates d'alkyles tels que le poly(méthacrylate de méthyle) ; un polyhydroxyalkanoate ; les homo- et copolyamides ; les polycarbonates ; les polyesters dont le poly(téréphtalate d'éthylène) et le poly(téréphtalate de butylène) ; les polyéthers tels que le poly(phénylène éther), le poly(oxyméthylène), le poly(oxyéthylène) ou poly(éthylène glycol) et le poly(oxypropylène) ; le polystyrène ; les copolymères de styrène et d'anhydride maléique ; le poly(chlorure de vinyle) ; les polymères fluorés tels que le poly(fluorure de vinylidène), le polytétrafluorure d'éthylène et le polychlorotrifluoro-éthylène ; les caoutchoucs naturels ou synthétiques ; les polyuréthanes thermoplastiques ; les polyaryl éther cétones (PAEK) tels que la polyétheréthercétone (PEEK) et la polyéther cétone cétone (PEKK) ; le polyétherimide ; la polysulfone le poly(sulfure de phénylène) ; l'acétate de cellulose ; le poly(acétate de vinyle) ou un mélange de deux ou plusieurs de ces polymères
- le ou les monomère(s) sont sélectionné(s) parmi les composés suivants : méthacrylate de méthyle, acrylate de méthyle, acrylate d'éthyle, acide acrylique, acide méthacrylique, styrène, acide crotonique, gamma-butyrolactone, delta-valerolactone et leurs mélanges.
- l'injection de l'effluent gazeux lors de l'étape de condensation est réalisée à co-courant ou à contrecourant du liquide absorbant ;
- le procédé comporte en outre une étape de séparation sur le condensat obtenu à l'issue de l'étape de condensation avant l'étape de vaporisation partielle ;
- le procédé comporte en outre une étape d'ajustement de la température de la fraction redirigée vers l'enceinte de condensation pour absorber à nouveau le(s) monomère(s) contenu dans l'effluent gazeux ; Cette étape peut par exemple comporter un chauffage ou à un refroidissement.
- au moment de l'étape de condensation, des additifs sont ajoutés dans le liquide absorbant, lesdits additifs pouvant être choisis parmi des inhibiteurs de polymérisation ;
- au moment de l'étape de vaporisation partielle, des additifs sont ajoutés dans le circuit, lesdits additifs pouvant être choisis parmi des inhibiteurs de polymérisation.

L'invention a en outre pour objet un système de traitement d'un effluent gazeux issu d'une décomposition pyrolytique d'un polymère ou d'un mélange de polymères, permettant de récupérer un ou plusieurs monomère(s) contenu(s) dans ledit effluent gazeux, ledit système étant caractérisé en ce qu'il comprend :
- une enceinte de condensation apte à être maintenue sous une première pression p₁, ladite enceinte comprenant, dans sa paroi latérale, un orifice d'entrée de l'effluent gazeux et un dispositif d'absorption apte à permettre une mise en contact dudit effluent gazeux avec un liquide absorbant dont la température est inférieure à celle de l'effluent gazeux, ladite enceinte comprenant en outre un orifice de sortie de gaz à son extrémité supérieure et un orifice de sortie du condensat obtenu, dans sa partie inférieure,
- une deuxième enceinte en communication fluidique avec l'enceinte de condensation et destinée à accueillir le liquide contenant le condensat obtenu à l'issue de l'étape de condensation, ladite deuxième enceinte étant apte à être maintenue à une deuxième pression p₂ inférieure à la première pression p₁, de manière à provoquer la détente du condensat et sa vaporisation partielle adiabatique,
- une pompe permettant de récupérer une fraction liquide issue de la deuxième enceinte pour la réinjecter dans la première enceinte de condensation via le dispositif d'absorption.

Selon d'autres caractéristiques optionnelles du système :
- il comprend en outre un échangeur de chaleur, disposé en aval de la deuxième enceinte, permettant de condenser la fraction gazeuse issue de la vaporisation partielle provoquée par la détente du condensat dans la deuxième enceinte, et un moyen de purification des constituants de ladite fraction gazeuse condensée ;
- il comprend en outre un dispositif de séparation, disposé en amont de la deuxième enceinte, de préférence apte à séparer des composés par filtration, décantation, centrifugation ou estérification ;
- il comprend en outre un échangeur de chaleur en amont de la première enceinte apte à ajuster la température de, de préférence à refroidir, la fraction liquide issue de la deuxième enceinte avant son injection dans la première enceinte ;
- il comprend en outre un dispositif de purification, disposé en aval de la deuxième enceinte, apte à purifier une partie de la fraction liquide issue de la deuxième enceinte ;
- il comprend en outre un point d'injection de liquide absorbant.

D'autres avantages et caractéristiques de l'invention apparaitront à la lecture de la description suivante donnée à titre d'exemple illustratif et non limitatif, en référence aux Figures annexées qui représentent :
- Figure 1, une vue synoptique d'un exemple de procédé selon l'invention,
- Figure 2, un schéma synoptique d'un exemple de système conforme à l'invention.

### [Description détaillée de l'invention]

Dans la suite de la description, on entend par « monomère », une molécule qui peut subir une polymérisation. On entend par « monomère », l'unité monomère la plus importante constitutive d'un polymère. Ainsi, dans le PMMA, le monomère est le MéthAcrylate de Méthyle (MAM) alors que c'est le styrène pour le polystyrène.

Le terme « polymérisation » tel qu'utilisé se rapporte au procédé de transformation d'un monomère ou d'un mélange de monomères en un polymère.

Le terme « dépolymérisation » tel qu'utilisé se rapporte au procédé de transformation d'un polymère en un ou plusieurs monomère(s) et/ou oligomère(s) et/ou polymère(s) de plus petite masse molaire que le polymère initial.

L'expression « décomposition pyrolytique » correspond au sens de l'invention à une étape de montée à très haute température entrainant une transformation d'un polymère en différents composés incluant des monomères.

On entend par « polymère », soit un copolymère soit un homopolymère. Un « copolymère » est un polymère regroupant plusieurs unités monomères différentes et un « homopolymère » est un polymère regroupant des unités monomères identiques.

On entend par « polymère thermoplastique », un polymère qui, de manière répétée, peut être ramolli ou fondu sous l'action de la chaleur et qui adopte de nouvelles formes par application de chaleur et de pression. Des exemples de thermoplastiques sont, par exemple : du polyéthylène, un polymère (méth)acrylique tel que le poly(méthacrylate de méthyle) (PMMA), ou encore le polystyrène (PS), l'acide polyLactique (PLA), les polyhydroxyalcanoates (PHA).

On entend par « polymère (méth)acrylique », un homopolymère ou un copolymère à base de monomère (méth)acrylique, lequel est par exemple choisi parmi le méthacrylate de méthyle, le méthacrylate d'éthyle, l'acrylate de méthyle, l'acrylate d'éthyle, l'acide méthacrylique, l'acide acrylique, l'acrylate de n-butyle, l'acrylate d'isobutyle, le méthacrylate de n-butyle, le méthacrylate d'isobutyle, l'acrylate de cyclohexyle, le méthacrylate de cyclohexyle, l'acrylate d'isobornyle, le méthacrylate d'isobornyle et leurs mélanges. Le poly(méthacrylate de méthyle) (PMMA) est un exemple particulier de polymère (méthacrylique) obtenu par polymérisation d'un monomère de méthacrylate de méthyle. Le terme « PMMA », au sens de l'invention, désigne des homo- et copolymères de méthacrylate de méthyle (MAM), le rapport en poids de MAM dans le PMMA étant de préférence d'au moins 70 % en poids pour le copolymère de MAM.

On entend par « copolymère à base de méthacrylate de méthyle » un copolymère ayant au moins un monomère de méthacrylate de méthyle. Par exemple, un copolymère à base méthacrylate de méthyle peut être un copolymère comprenant au moins 70 %, de préférence 80 %, avantageusement 90% en poids de MAM dans le PMMA.

On entend par « fraction molaire légère » la proportion d'un composant dont la volatilité relative, par rapport aux autres composants d'un mélange, est la plus élevée, la « fraction molaire moyenne » la proportion d'un composant dont la volatilité relative, par rapport aux autres composants du mélange, est moyenne et, « fraction molaire lourde » la proportion d'un composant dont la volatilité relative, par rapport aux autres composants du mélange, est la plus basse.

On entend par « chaleur latente de vaporisation ΔHv à l'état standard », ou encore « enthalpie de vaporisation », exprimée en J.mol⁻¹, la variation d'enthalpie accompagnant la vaporisation d'une mole d'un composé.

On entend par « chaleur spécifique molaire à l'état standard », exprimée en J.mol⁻¹.K⁻¹, la quantité de chaleur à fournir à une mole d'un composé pour élever sa température de 1°C .

On entend par « condensation » le changement d'état d'un composé passant d'un état gazeux à un état liquide. On entend par « vaporisation » le changement d'état d'un composé passant d'un état liquide à un état gazeux.

Au sens de l'invention, on entend par « condensat » un mélange de composés obtenu à l'issue d'une étape de condensation d'un gaz. Dans le cadre de l'invention, ce mélange comprend de préférence un ou plusieurs monomère(s) et un liquide absorbant ayant participé, notamment par échange thermique, à la condensation du ou des monomère(s). Le condensat peut également correspondre à un ou plusieurs monomère(s) après une étape de purification. Le gaz à condenser comprend au moins 30% massique, préférablement au moins 40% massique et plus préférablement au moins 50% massique des matières condensables.

Au sens de l'invention, l'expression « liquide absorbant » correspond à un composé, à l'état liquide à une température de 50°C et une pression de 1 Bar absolu, étant apte à absorber une énergie thermique provenant du ou des monomères de l'effluent gazeux.

On entend par « effluent gazeux » un produit de réaction issu d'une décomposition thermique et comportant des fractions molaires pouvant comprendre notamment le(s) monomère(s). Le gaz à condenser comprend au moins 30% massique, préférablement au moins 40% massique et plus préférablement au moins 50% massique des matières condensables.

Par « échange thermique » on entend au sens de l'invention un système permettant de transférer de la chaleur entre un premier élément et un second élément, le premier élément ayant une température plus élevée que le second élément cela entraine un refroidissement du premier élément et un échauffement du second. Par « mettre au contact », on entend au sens de l'invention un contact direct c'est-à-dire un échange thermique sans paroi de séparation entre le premier et le second élément.

L'expression « communication fluidique » au sens de l'invention correspond au fait que deux pièces soient agencées de façon à permettre le passage d'un fluide d'une première pièce à une seconde pièce sans qu'il y ait de fuite.

On entend par « sensiblement égal » au sens de l'invention une valeur variant de moins de 30 % par rapport à la valeur comparée, de préférence de moins de 20 %, de façon encore plus préférée de moins de 10 %.

Dans la suite de la description, les mêmes références sont utilisées pour désigner les mêmes éléments.

**Selon un aspect,** l'invention porte sur un **procédé 200 de traitement** d'un effluent gazeux. L'effluent gazeux provient généralement de la décomposition pyrolytique d'un **polymère ou d'un mélange de polymères.** Le polymère peut par exemple être les polyéthylènes comme le polyéthylène haute densité (PEHD) ou le polyéthylène téréphtalate (PET) ; le polypropylène, le polybutadiène et le polybutylène, d'un homo- et copolymère d'oléfines tels que les copolymères acrylonitrile-butadiène-styrène, les copolymères styrène-butadiène-méthacrylate d'alkyle (ou SBM) ; les homo- et copolymères acryliques et les polyméthacrylates d'alkyles tels que le poly(méthacrylate de méthyle) (PMMA) ; un polyhydroxyalkanoate ; les homo- et copolyamides ; les polycarbonates ; les polyesters dont le poly(téréphtalate d'éthylène) et le poly(téréphtalate de butylène) ; les polyéthers tels que le poly(phénylène éther), le poly(oxyméthylène), le poly(oxyéthylène) ou poly(éthylène glycol) et le poly(oxypropylène) ; le polystyrène ; les copolymères de styrène et d'anhydride maléique ; le poly(chlorure de vinyle) ; les polymères fluorés tels que le poly(fluorure de vinylidène), le polytétrafluorure d'éthylène et le polychlorotrifluoro-éthylène ; les caoutchoucs naturels ou synthétiques ; les polyuréthanes thermoplastiques ; les polyaryl éther cétones (PAEK) tels que la polyétheréthercétone (PEEK) et la polyéther cétone cétone (PEKK) ; le polyétherimide ; la polysulfone le poly(sulfure de phénylène) ; l'acétate de cellulose ; le poly(acétate de vinyle), le polypropiolactone ou un mélange de deux ou plusieurs de ces polymères.

Un PolyHydroxyAlkanoate (PHA) peut par exemple être sélectionné parmi : le poly-3-hydroxybutyrate (P3HB), le poly-4-hydroxybutyrate (P4HB), le poly-3-hydroxypropionate (P3HP), le poly-5-hydroxyvalerate (P5HV), le poly-6-hydroxyhexanoate, l'acide polylactique (PLA), l'acide polyglycolique, le poly-3-hydroxybutyrate-co-3-hydroxypropionate, le poly-3-hydroxybutyrate-co-(D)-lactide, le poly-3-hydroxybutyrate-co-4-hydroxybutyrate (poly-3HB-co-4HB), le poly-3-hydroxybutyrate-co-3-hydroxyvalérate (poly-3-HB-co-3HV), le poly-3-hydroxybutyrate-co-5-hydroxyvalérate et le poly-3-hydroxybutyrate-co-3-hydroxyhexanoate qui sont essentiellement des polyesters produits naturellement par les microorganismes et qui sont formés par la polymérisation d'un ou plusieurs monomères.

Les composants monomères des PHA comprennent, sans s'y limiter, les formes acides ou ester tels que l'acide acrylique, l'acide 3-hydroxybutyrique, le 3-hydroxybutyrate, le 3-hydroxypropionate, le 3-hydroxyvalérate, le 3-hydroxyhexanoate, le 3-hydroxyheptanoate, le 3-hydroxyoctanoate, le 3-hydroxynonanoate, le 3-hydroxydécanoate, le 3-hydroxydodécanoate, le 4-hydroxybutyrate, le 4-hydroxyvalérate, le 5-hydroxyvalérate, le 6-hydroxyhexanoate, le 2-Méthyl-3-hydroxypropanoate, le 2-Méthyl-2-hydroxypropanoate, le 2-hydroxypropanoate (acide lactique) et le 2-hydroxyéthanoate (acide glycolique) ; et/ou les formes lactones ou lactames telles que caprolactone ou caprolactame, ou propiolactone, butyrolactone, valerolactone. De tels composants monomères peuvent former des homopolymères ou des copolymères. Bien que des exemples de copolymères PHA ayant deux composants monomères différents aient été fournis, le PHA peut avoir plus de deux composants monomères différents. Lors de la pyrolyse des PHA et PLA, d'autres composants monomères peuvent être formés et utilisés comme monomères, ou comme réactifs dans de nouvelles synthèses.

De préférence, le polymère est sélectionné parmi : le PolyMéthacrylate de Méthyle (PMMA), un polyhydroxyalkanoate, le PLA, le polystyrène, les copolymères de styrène et d'anhydride, ou un mélange de deux ou plusieurs de ces polymères.

En outre, le polymère peut provenir d'un matériau composite comportant un polymère et un renfort.

Un tel procédé permet de récupérer **un ou plusieurs monomère(s)** contenu(s) dans un effluent gazeux. Il n'est pas systématique que la décomposition pyrolytique d'un polymère conduise à la formation de monomère(s). Ainsi, il peut se former lors de cette décomposition d'autres monomères qui ne sont pas moins intéressants à valoriser qu'un monomère. Ainsi, le produit d'intérêt pourra être un monomère ou un mélange de monomères issu(s) de la décomposition du (des) polymères. Le produit d'intérêt peut en particulier être un monomère ou un mélange de monomères issu(s) de la décomposition du (des) polymères. Typiquement, en fin de procédé, l'utilisateur disposera d'une fraction enrichie en monomères qu'il pourra par exemple utiliser telle quelle, purifier plus avant ou encore transformer.

Le ou les monomère(s) peut(vent) par exemple être sélectionné(s) parmi les composés suivants : méthacrylate de méthyle, acrylate de méthyle, acrylate d'éthyle, acide acrylique, acide méthacrylique, styrène, acide crotonique, gamma-butyrolactone, delta-valerolactone et leurs mélanges. De façon préférée, le ou les monomères sont sélectionnés parmi les composés suivants : méthacrylate de méthyle, acide méthacrylique, acide acrylique, styrène, et leurs mélanges.

De préférence, le gaz à traiter est issu de la décomposition thermique d'un polymère thermoplastique et le produit d'intérêt à récupérer est le monomère du polymère décomposé. Le monomère ainsi récupéré peut alors être recyclé.

Pour cela, le procédé met en oeuvre un **liquide absorbant** qui pourra avantageusement être réutilisé dans le cadre d'un système de condensation cyclique qui sera détaillé plus loin.

Le liquide absorbant est avantageusement sélectionné pour favoriser au mieux les échanges thermiques avec l'effluent gazeux dans l'enceinte de condensation 110 d'une part et vaporisation partielle du condensat lors de la détente dans la deuxième enceinte 130 d'autre part. Ainsi, le choix du liquide absorbant est de préférence adapté au monomère(s) à récupérer. Le ou les monomère(s) à récupérer sont liquides à la pression atmosphérique de 1013mbar.

De préférence, le liquide absorbant est sélectionné de sorte que le rapport entre sa chaleur latente de vaporisation ΔHv à l'état standard et sa chaleur spécifique molaire Cp à l'état standard soit le plus élevé possible et, dans tous les cas, supérieur à celui du (des) monomère(s), à récupérer. Ainsi, l'efficacité du procédé de traitement selon l'invention est largement améliorée. Ces valeurs à l'état standard de chaleur latente de vaporisation et de chaleur spécifique molaire peuvent être retrouvées dans les manuels connus de l'homme du métier. Elles correspondent de préférence l'état à une pression de 1 bar. La chaleur latente de vaporisation ΔHv à l'état standard du liquide absorbant est par exemple supérieure ou égale à 20 kJ/mole, de préférence supérieure ou égale à 30 kJ/mole, de façon plus préférée supérieure ou égale à 40 kJ/mole, et de façon encore plus préférée supérieure ou égale à 50 kJ/mole.

Avantageusement, le liquide absorbant est choisi parmi l'un des composés suivants : le benzène, le benzonitrile, un composé de formule R-OH, un composé de formule R-COOH, dans lesquels R peut être choisi parmi des alkyles, dont le nombre de carbones est compris entre 1 et 5, un phényl ou un hydrogène. Ainsi, le liquide absorbant peut par exemple être sélectionné parmi : le benzène (71-43-2), le benzonitrile (100-47-0), le monoxyde de dihidrogène (7732-18-5), le méthanol (67-56-1), l'éthanol (64-17-5), le propanol (71-23-8 ou 67-63-0), butanol (71-36-3 ; 78-92-2 ; 15892-23-6 ; 14898-79-4 ; 4221-99-2), le phénol (108-95-2), l'acide formique (64-18-6), l'acide acétique (64-19-7) ou leurs mélanges.

Dans un premièr mode plus avantageusement, pour des raisosn environnementale et écologique, le liquide absorbant est choisi parmi l'un des composés suivants : un composé de formule R-OH, un composé de formule R-COOH, dans lesquels R peut être choisi parmi des alkyles, dont le nombre de carbones est compris entre 1 et 5, ou un hydrogène. Ainsi, le liquide absorbant peut par exemple être sélectionné parmi : le monoxyde de dihidrogène (7732-18-5), le méthanol (67-56-1), l'éthanol (64-17-5), le propanol (71-23-8 ou 67-63-0), butanol (71-36-3 ; 78-92-2 ; 15892-23-6 ; 14898-79-4 ; 4221-99-2), l'acide formique (64-18-6), l'acide acétique (64-19-7) ou leurs mélanges.

De préférence, le liquide absorbant est choisi de sorte que son point d'ébullition soit de l'ordre de grandeur de celui du (des) monomère(s), à récupérer, c'est-à-dire qu'il ne soit pas inférieur ou supérieur de plus de 80°C, de préférence 50°C au point d'ébullition du (des) monomère(s) à récupérer. Dans ce cas, on ne peut pas exclure la formation d'azéotropes entre le liquide absorbant et le(s) monomère(s). De façon préférée, le liquide absorbant présente de préférence un point d'ébullition supérieur ou sensiblement égal à celui du ou des monomères à récupérer et/ou de l'azéotrope qu'il forme avec le ou les monomères à récupérer.

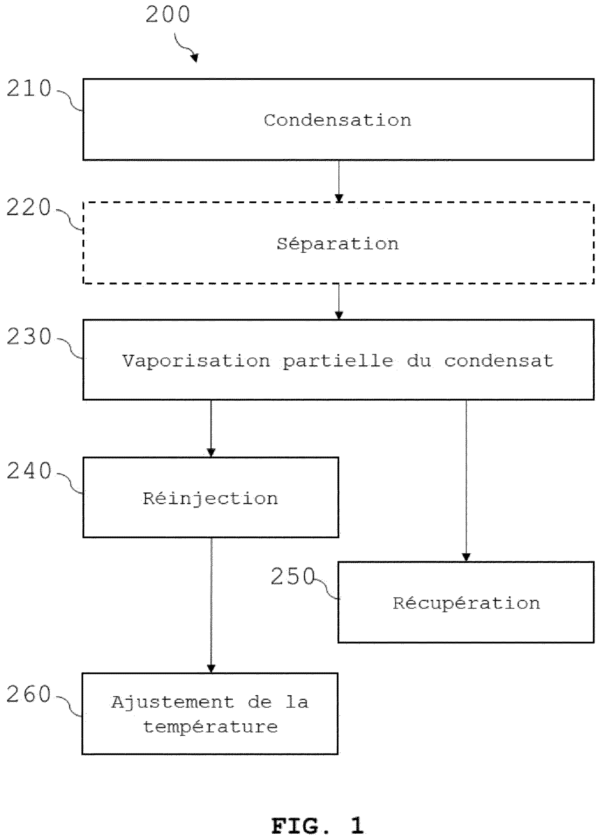

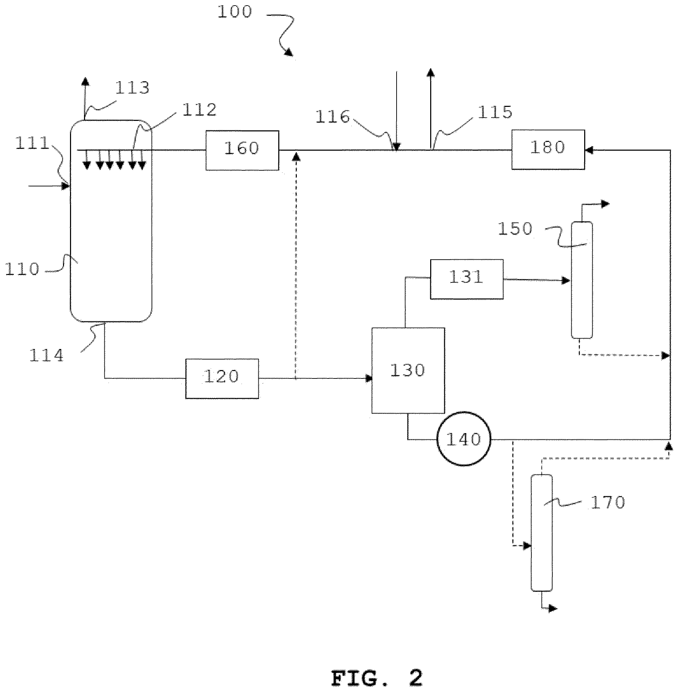

Un exemple de procédé selon l'invention est illustré à la **figure** 1 et il sera détaillé en lien avec un système selon l'invention tel que schématisé à la **figure 2****.** Comme cela est illustré à la figure 1, le procédé selon l'invention comporte une étape de condensation 210 incluant l'injection de l'effluent gazeux dans une enceinte de condensation 110 maintenue sous une première pression p₁. L'enceinte de condensation 110 peut par exemple être maintenue à une pression p₁ comprise entre 0,1 et 5 bars, de préférence entre 0,5 et 2 Bars et de façon préférée entre 0,8 et 1,5 Bars et de façon encore préférée entre 0,9 et 1,2 Bars absolus.

L'étape de condensation 210 comporte également la mise en contact de l'effluent gazeux avec un liquide absorbant. La température du liquide absorbant est inférieure à la température de l'effluent gazeux, afin que le(s)dit(s) monomère(s) se condense(nt) au contact du liquide absorbant. De façon préférée, la température du liquide absorbant est inférieure d'au moins 50°C à la température de l'effluent gazeux, de façon plus préférée inférieure d'au moins 60°C et de façon encore plus préférée inférieure d'au moins 80°C. En outre, la température du liquide absorbant est par exemple inférieure d'au plus 450°C à la température de l'effluent gazeux. De façon avantageusement la température du liquide absorbant est inférieure d'au moins 50°C et d'au plus 450°C à la température de l'effluent gazeux, et plus avantageusement d'au moins 60°C et d'au plus 450°C. En particulier, le liquide absorbant peut présenter, au niveau de son entrée dans l'enceinte de condensation 110, une température inférieure ou égale à 140°C, de préférence inférieure ou égale à 120°C, de façon plus préférée inférieure ou égale à 100°C et de façon encore plus préférée inférieure ou égale à 80°C.

La mise en contact peut par exemple être réalisée via une colonne à pulvérisation (aspersion), une micro-aspersion, une colonne à bulles, une colonne à garnissage, un film tombant, une colonne à plateaux, un effet venturi (par exemple les systèmes de type BUSS-LOOP), un système de contact centrifuge de type spinning disk (disques tournants) ou de type « rotating packed bed - RPB » aussi connus comme HiGee. Dans les systèmes centrifuges, la force de gravité obtenue est utilisée pour forcer le liquide à traverser l'équipement en générant un film mince, alors que le gaz traverse l'équipement en mode co-courant ou contre-courant. Notamment la technologie RPB / HiGee est appropriée pour favoriser le contact entre gaz-Liquide de l'invention.

De manière facultative, des additifs peuvent être ajoutés au liquide absorbant lors de l'étape de condensation 210. Ainsi, il est possible d'ajouter des additifs inhibiteurs de polymérisation, tels que l'hydroquinone, la phénothiazine (PTZ), la monométhyl ether hydroquinone (MEHQ) ou d'autres produits connus limitant les réactions de polymérisation radicalaire, ce qui permet de stabiliser l'effluent gazeux, une fois condensé, issu de la pyrolyse de polymère(s).

De manière avantageuse, le procédé selon l'invention peut en outre comporter une étape de contrôle de l'acido-basicité du liquide absorbant et de régulation de son pH en ajustant le débit d'une solution acide ou basique de sorte que le pH soit compris entre 4 et 9, de préférence entre 5 et 8. Ce contrôle du pH est particulièrement important lorsque la réaction de pyrolyse génère des sous-produits basiques ou acides qui pourraient s'accumuler dans le liquide absorbant et provoquer la corrosion des installations. Avantageusement, le contrôle du pH permet d'éliminer des acides formés lors de la pyrolyse ou de séparer ces acides des autres composants selon leur constante d'acidité.

Par exemple, lorsque des plastiques à recycler contiennent du PVC (Polychlorure de vinyle) la pyrolyse de ce-dernier génère l'acide chlorhydrique qui peut non seulement provoquer la corrosion des installations mais aussi abaisser progressivement le pH du liquide absorbant et s'accumuler ainsi dans la boucle de condensation. Ainsi, le procédé selon l'invention peut comprendre une étape d'injection dans le liquide absorbant d'une base telle qu'une base sélectionnée parmi l'oxyde de calcium, l'hydroxyde de sodium, l'hydroxyde de calcium ou l'hydroxyde de potassium, le méthylate de sodium ou de potassium, les hydrogénocarbonates ou carbonates de sodium, potassium, ou de calcium.

En outre, lors de cette étape de condensation 210, une fraction molaire légère éventuellement contenue dans l'effluent gazeux issu de la pyrolyse de polymère(s), peut ne pas être intégralement condensée par contact avec le liquide absorbant. Elle peut alors être évacuée hors de l'enceinte de condensation 110, à l'état gazeux, *via* l'orifice de sortie 113 disposé à l'extrémité supérieure de l'enceinte de condensation 110. Ainsi, le procédé selon l'invention peut également comporter une étape de récupération d'une fraction molaire légère non condensée et sa mise en contact avec un échangeur de chaleur. En effet, cette fraction légère peut être valorisée énergétiquement pour permettre par exemple la dépolymérisation des résidus plastiques.

Dans certains cas, le procédé selon l'invention peut comporter une étape de séparation 220 en aval de l'étape de condensation 210. Cette étape de séparation 220 peut être destinée à purifier le condensat généré lors de l'étape de condensation 210 avant l'étape de vaporisation partielle 230. Cette étape de séparation 220 peut par exemple comporter une filtration, une décantation ou encore une centrifugation.

En outre, de manière optionnelle, avant d'être acheminé dans la deuxième enceinte 130, la température du condensat peut être modifiée *via* un échangeur de chaleur complémentaire non représenté sur la Figure 1. Par exemple, le procédé peut comporter en outre une étape de chauffage du condensat obtenu à l'issue de l'étape de condensation 210 avant l'étape de vaporisation partielle 230.

Le procédé selon l'invention comporte également une **étape de vaporisation partielle 230** du condensat obtenu à l'issue de l'étape de condensation 210. Cette vaporisation partielle est permise grâce à la mise en oeuvre d'une détente du condensat dans une deuxième enceinte 130 maintenue sous une pression p₂ inférieure à la pression p₁ de la première enceinte de condensation 110. La deuxième enceinte 130 peut par exemple être maintenue à une pression p₂ comprise entre 0,001 et 0,8 bars, de préférence entre 0,01 et 0,5 et de façon préférée entre 0,1 et 0,4 Bars, bornes comprises.

Avantageusement, la différence de pression Δp₁-p₂ en valeur absolue entre la première enceinte 110 et la deuxième enceinte 130 est supérieure ou égale à 0,5 bar, de façon préférée supérieure ou égale à 0,6 bar, de façon plus préférée supérieure ou égale à 0,7 bars et de façon encore plus préférée supérieure ou égale à 0,8 bars. Une différence de température entre la première enceinte 110 et la deuxième enceinte 130 peut être réalisée en ajustant la différence de pression Δp₁-p₂ entre ces deux enceintes. De façon préférée la différence de température entre la première enceinte 110 et la deuxième enceinte 130 est sensiblement égale à 25°C. La différence de température sera avantageusement au moins égale à 5°C et inférieure ou égale à 25°C. De telles valeurs permettent d'améliorer la performance du procédé de traitement.

Comme précédemment, de manière facultative, des additifs peuvent être ajoutés dans le circuit au moment de l'étape de vaporisation partielle 230. Les additifs sont ici aussi de préférence des inhibiteurs de polymérisation

Le procédé selon l'invention comporte également une **étape de récupération 250** comportant une purification d'une seconde fraction chargée en monomère(s), liquide ou vapeur, obtenue à l'issue de l'étape de vaporisation partielle 230.

Ainsi, si la seconde fraction chargée en monomère(s) est une fraction vapeur alors l'étape de récupération, 250 comporte de préférence une condensation de la fraction vapeur obtenue à l'issue de l'étape de vaporisation partielle 230. Alternativement, si la seconde fraction chargée en monomère(s) est une fraction liquide alors l'étape de récupération 250 peut comporter une filtration ou une décantation de la fraction liquide obtenue à l'issue de l'étape de vaporisation partielle 230. Ladite condensation de la fraction vapeur, ainsi que ladite filtration ou décantation de la fraction liquide obtenues à l'issue de l'étape de vaporisation partielle 230 sont considérées comme des purifications dans l'étape de récupération 250.

En outre, dans le cas de formation d'azéotropes, le procédé selon l'invention comporte une étape de séparation supplémentaire. En effet, en présence d'azéotropes, les produits constitutifs de l'azéotrope, c'est-à-dire dans le cas présent le liquide absorbant et le (s) monomère(s), seront séparés par des méthodes bien connues de l'homme du métier et le liquide absorbant pourra être à nouveau être utilisé lors de l'étape de condensation 210. Cette séparation consistera par exemple à utiliser deux colonnes de distillation successives maintenues à des pressions différentes, et/ou des extractions liquide-liquide ou encore des distillations extractives. Cette étape supplémentaire permet avantageusement d'isoler le(s) monomère(s) que l'on souhaite récupérer et de recycler le liquide absorbant afin de le renvoyer dans la boucle de condensation.

L'étape de récupération peut également comprendre une injection d'inhibiteurs de polymérisation de façon à maintenir une teneur de l'ordre de 5 à 300 mg/kg dans la solution de monomères.

Le procédé selon l'invention comporte également une **étape de réinjection 240** consistant à rediriger, au moins en partie, une première fraction, liquide ou vapeur, obtenue à l'issue de l'étape de vaporisation partielle 230 vers l'enceinte de condensation 110. Cette première fraction comporte de préférence en majorité du liquide absorbant, sous forme liquide ou gazeuse suite à l'étape de vaporisation partielle 230.

Ainsi, si la première fraction est une fraction vapeur alors l'étape de réinjection 240 comporte de préférence une condensation de cette fraction vapeur obtenue à l'issue de l'étape de vaporisation partielle 230. Alternativement, si la première fraction est une fraction liquide alors l'étape de réinjection 240 comporte la redirection, vers l'enceinte de condensation 110, d'au moins une partie de la fraction liquide obtenue à l'issue de l'étape de vaporisation partielle 230. En outre, la première fraction, sous forme de fraction liquide, peut subir une étape de séparation permettant de retourner une fraction enrichie en liquide absorbant.

La fraction ainsi redirigée pourra être utilisée pour absorber à nouveau le(s) monomère(s), contenu(s) dans l'effluent gazeux.

En particulier, le procédé selon l'invention peut en outre comporter une **étape d'ajustement de la température 260** de la fraction redirigée vers l'enceinte de condensation 110. Ainsi, cette fraction, *a priori* liquide, pourra être réchauffée ou refroidie avant d'être à nouveau introduite dans l'enceinte de condensation 110.

Comme cela a été discuté, le liquide absorbant peut être contaminé par des résidus issus notamment de décomposition pyrolytique du polymère ou du mélange de polymères. Ainsi, avant d'être réinjecté *via* le dispositif d'absorption 112, le liquide absorbant peut faire l'objet d'une étape de purification pouvant être mise en oeuvre par un dispositif de purification 150 ou 170. Cette étape de purification peut par exemple correspondre à une filtration, une décantation, une centrifugation, une distillation, une séparation membranaire, une extraction de solvant et/ou une condensation et toute combinaison possible.

En outre, en lien avec les étapes facultatives de purification du liquide absorbant, il est possible que la quantité de liquide absorbant dans le système diminue ou qu'il soit nécessaire de le renouveler. De préférence, le procédé selon l'invention comporte donc une étape d'injection de liquide absorbant dans le système en un point d'injection 116. Le liquide absorbant injecté est à une température suffisamment basse pour que l'augmentation de température du liquide absorbant permette d'absorber la chaleur de condensation du (des) monomère(s) sans provoquer une vaporisation significative du liquide absorbant. Par ailleurs, le point d'injection 116 peut également permettre l'injection des additifs et notamment des inhibiteurs de polymérisation avec le liquide absorbant frais. De préférence, le procédé comporte une étape d'injection d'inhibiteurs de polymérisation de façon à maintenir une teneur de l'ordre de 5 à 300 mg/kg de monomère(s) dans le liquide absorbant, et de préférence de 50 à 200 mg/kg monomère(s).

En outre, notamment dans un contexte de cyclage du liquide absorbant, le procédé selon l'invention peut comporter une étape d'analyse du liquide absorbant. Cette étape d'analyse peut par exemple comporter une mesure du pH, de la conductivité, et/ou de la densité. Elle peut également comporter la réalisation d'une analyse par chromatographie gazeuse ou l'établissement d'un spectre Infra-rouge ou Raman.

**Selon un autre aspect,** l'invention porte sur un **système de traitement.** La description suivante du système selon l'invention est faite en regard de la **Figure 2** qui représente un schéma du système selon un mode de réalisation. Bien sûr, l'invention ne se limite pas à ce schéma, et le système peut être réalisé sous différentes variantes possibles sans sortir du cadre de l'invention.

Le système 100 permet de traiter les effluents gazeux issus d'une décomposition pyrolytique d'un polymère ou d'un mélange de polymères, afin de pouvoir récupérer un produit d'intérêt contenu dans ces effluents gazeux.

Le système 100 comprend une première enceinte, aussi dénommée enceinte de condensation ou étage de condensation dans la suite et référencée 110. Dans le mode de réalisation illustré, cette enceinte 110 de condensation, pouvant être placée sous une première pression p₁, comprend un orifice d'entrée 111. L'effluent gazeux encore chaud issu de la décomposition thermique du(des) polymère(s) arrive par cet orifice 111 d'entrée dans l'enceinte de condensation 110. L'enceinte de condensation 110 est en outre équipée d'un dispositif d'absorption 112. Ce dispositif d'absorption 112 permet d'injecter un liquide absorbant dans l'enceinte et donc de permettre le contact entre ce liquide absorbant et l'effluent gazeux entrant. Le dispositif d'absorption 112 être un dispositif de dispersion liquide comme illustré dans la figure 2 mais également consister en une colonne garnie, un système de dispersion et contact liquide-gaz... La température du liquide absorbant est bien inférieure à celle de l'effluent gazeux, de sorte que le(s) monomère(s) contenu(s) dans l'effluent gazeux peuvent se condenser dans le liquide absorbant par échange thermique.

Le refroidissement dans l'enceinte 110 peut être réalisé à contrecourant ou bien à co-courant. Ainsi, le dispositif d'absorption 112 pourrait correspondre à un dispositif de pulvérisation du liquide absorbant situé au-dessus de l'orifice d'entrée de l'effluent gazeux et capable de capter l'effluent gazeux. Dans ce type d'installation un brouillard peut se former à cause des fines gouttelettes d'absorbant. Ce brouillard peut alors être entrainé avec les gaz incondensables et conduire à une perte d'absorbant et de produit. L'installation est alors équipée d'un système de captation du brouillard (coalesceur liquide/gaz), qui consiste en général en un garnissage, ou un fin treillis qui provoque la coalescence des gouttelettes. Ce type d'installation est bien connu de l'homme de l'art.

L'enceinte 110 de condensation peut également comporter un orifice de sortie 113 apte à permettre l'évacuation d'une éventuelle fraction molaire légère, contenue dans l'effluent gazeux issu de la pyrolyse de polymère(s), qui ne serait pas condensée par contact avec le liquide absorbant. Cette fraction molaire légère peut par exemple faire l'objet d'un traitement aval pouvant notamment inclure une condensation.

Le mélange liquide condensé à une première pression p₁, contenant notamment le(s) monomère(s) et le liquide absorbant, encore dénommé condensat dans la suite de la description, peut être évacué *via* un orifice de sortie 114 disposé de préférence dans le fond de l'enceinte 110 de condensation.

Dans une variante de réalisation, lorsque le condensat se présente sous la forme d'un système biphasique, on peut prévoir en outre un dispositif de séparation 120 des composés par filtration, décantation ou centrifugation par exemple. Dans ce cas, une première phase de liquide absorbant, essentiellement dépourvue du(des) monomère(s) ayant condensé, est réinjectée, par l'intermédiaire d'une pompe, dans l'étage de condensation 110 via le système d'absorption 112, juste après le moyen de séparation 120, selon le circuit en traits pointillés sur le schéma de la Figure 2, tandis que l'autre phase de liquide absorbant contenant les composés ayant condensé, est acheminée vers la deuxième enceinte 130. Ce moyen de séparation permet alors de réaliser une première purification du condensat. Ainsi, le moyen de séparation 120 est de préférence disposé en amont de la deuxième enceinte 130. Dans une variante, le liquide absorbant séparé par décantation peut être purifié par exemple par adsorption isotherme, les impuretés contenues dans le liquide absorbant étant par exemple piégées sur des charbons actifs, zéolithe, résines échangeuses d'ions, ou toute autre technique d'adsorption. Le liquide absorbant est alors ensuite recombiné avec l'autre phase de liquide absorbant issu de la décantation et orienté vers l'unité 130.

Le dispositif de séparation 120 illustré à la figure 2 peut également être un dispositif de filtration du condensat permettant d'éliminer les poussières issues de la pyrolyse. Ainsi, le dispositif de séparation 120 peut avantageusement être sélectionné parmi : un filtre tel qu'un filtre presse, un filtre à charbon actif, un décanteur ou un centrifugeur.

En outre, le dispositif de séparation 120 peut dans certains cas être combiné avec une réaction d'estérification afin d'améliorer la purification du condensat. Notamment dans le cas où le liquide absorbant est sélectionné parmi les alcools ou contient des quantités significatives d'alcools, ainsi que des acides organiques, il peut être avantageux d'orienter ce flux sur un lit de catalyseur hétérogène, ou une unité de catalyse homogène, fonctionnant à une température stable. Comme catalyseur hétérogène pouvant convenir au système, il peut être utilisé des résines acides telles que des Amberlyst^{®} (e.g. Amberlyst A15, 35, 16, 36, 39, 46, 70, 131), des catalyseurs enzymatiques supportés, et d'autres catalyseurs acides solides. En présence d'une large quantité d'alcool, la réaction d'estérification des acides organiques est favorisée par déplacement d'équilibre, et de l'eau est produite stoechiométriquement à la quantité d'acide convertie. Les réactions d'estérification sont en général peu endothermiques ou exothermiques. La température du condensat est ainsi maintenue.

Le système 100 selon l'invention comporte une deuxième enceinte 130 vers laquelle peut ensuite être acheminé le condensat ayant ou non fait l'objet d'une séparation préalable. Cette deuxième enceinte 130 est apte à être maintenue à une deuxième pression p₂ inférieure à la première pression p₁. Le condensat arrivant dans cette deuxième enceinte 130 est alors détendu, ce qui provoque une vaporisation partielle adiabatique du condensat.

La deuxième enceinte 130 permettant de détendre le condensat et d'entraîner une vaporisation adiabatique partielle du condensat peut se présenter par exemple sous la forme d'un évaporateur à film mince, tel que par exemple l'évaporateur commercialisé par la société UIC GmBh, ou par la société VTA Verfahrenstechnische Anlagen GmbH & Co soit comme évaporateur à film raclé soit comme évaporateur à court temps de trajet ou encore sous la forme d'un cylindre à effet Vortex dans lequel le condensat est injecté tangentiellement à la paroi pour provoquer une rotation du fluide et un effet de vortex qui crée une dépression en son centre, le produit étant alors soutiré en partie basse (commercialisé par la société Penn Separator). Il est également possible d'utiliser un équipement sous la forme d'une cuve équipée d'un diffuseur en sa partie centrale, qui disperse le flux dans la capacité, d'un garnissage/piège de brouillard (dévésiculeur/coalesceur) en haut de la capacité pour coalescer les goulettes présentes dans la fraction vapeur, d'une sortie gaz en son point haut et d'une sortie liquide en son point bas. Ce type d'équipement est bien connu de l'homme de l'art et est par exemple décrit dans les Techniques de l'Ingénieur à savoir les documents « Évaporation dans le traitement des effluents liquides », W 2 750, écrit par Bernard GALLICHER et Olivier SAVEL et « Évaporation », J2320 V1, écrit par René LELEU.

La deuxième enceinte 130 dispose d'au moins deux orifices de sortie, un premier orifice permettant d'évacuer la fraction vapeur issue de la vaporisation partielle et un deuxième orifice permettant d'évacuer la fraction liquide non évaporée.

En fonction des combinaisons monomère / liquide absorbant sélectionnées, le(s) monomère(s), de préférence le(s) monomère(s), issu(s) de la décomposition du(des) polymère(s) seront contenus en majorité dans la fraction vapeur ou dans la fraction liquide. En effet, si le liquide absorbant est choisi de sorte que son point d'ébullition est nettement supérieur à celui du ou des monomère(s) à récupérer alors il est probable que le(s) monomère(s) issu(s) de la décomposition du(des) polymère(s) seront contenus en majorité dans la fraction vapeur.

De façon préférée, la fraction vapeur comprend une fraction molaire moyenne de l'effluent gazeux, la fraction molaire légère ayant déjà été évacuée au niveau de l'enceinte de condensation et la fraction molaire lourde restant absorbée dans le liquide absorbant. Avantageusement, la fraction vapeur comprend le(s) monomère(s), de préférence de base, issu(s) de la décomposition du(des) polymère(s). Cette fraction vapeur peut alors être acheminée vers un échangeur de chaleur 131 afin d'être condensée, puis vers un dispositif de purification 150, tel qu'une colonne de distillation par exemple, afin d'être purifiée. Cette fraction riche en monomères peut ensuite être valorisée.

Lorsque la fraction liquide comporte une majorité de liquide absorbant, elle est quant à elle, redirigée, au moins en partie, vers l'enceinte 110 de condensation où elle va à nouveau absorber le(s) monomère(s) de base par échange de chaleur. Le liquide absorbant circule donc en boucle dans le système 100. Pour cela, une pompe 140 disposée en aval de la sortie de la deuxième enceinte 130, permet de récupérer cette fraction liquide et de l'acheminer vers l'étage de condensation. Ainsi, le système 100 peut aussi être dénommé « boucle de condensation ».

Néanmoins, comme cela a été évoqué, le liquide absorbant peut se charger en contaminants. Dans ce contexte, le système comporte avantageusement un dispositif de purification 170 apte à purifier, par exemple régulièrement, une partie de la fraction comportant une majorité du liquide absorbant issue de la deuxième enceinte 130 après la détente du condensat. De façon préférée, la fraction comportant une majorité du liquide absorbant est la fraction liquide comme cela est illustré sur la figure 2. Le dispositif de purification 170 peut par exemple être sélectionné parmi : une unité de distillation, une membrane, un décanteur, un moyen d'extraction, une unité d'adsorption, une résine échangeuse d'ions. Le dispositif de purification 170 permet de débarrasser le liquide absorbant des impuretés accumulées au fur et à mesure du passage en boucle du liquide absorbant dans l'enceinte de condensation 110.

En outre, comme cela est illustré à la figure 2, le système 100 selon l'invention peut comporter un dispositif d'analyse 180 du liquide absorbant. En effet, il convient de vérifier si le liquide absorbant qui va être réinjecté répond à des critères prédéterminés de qualités. Le dispositif d'analyse peut par exemple être sélectionné parmi : spectromètre infrarouge, analyse Raman, un système de chromatographie en phase gazeuse, un conductimètre, un thermomètre ou un pH-mètre.

Dans ce contexte, le système peut comporter avantageusement un point de purge 115 apte à éliminer, de préférence régulièrement, du liquide absorbant et un point d'injection 116 apte à réinjecter, de préférence régulièrement, du liquide absorbant afin que le procédé puisse être mis en oeuvre avec un liquide absorbant qui ne soit pas saturé en impuretés et qui puisse toujours absorber le(s) monomère(s) à récupérer.

En outre, le système 100 selon l'invention peut de façon préférée comporter un échangeur de chaleur 160 intermédiaire disposé entre la sortie de la deuxième enceinte 130 et le dispositif d'absorption 112 de la première enceinte de condensation 110. Un tel échangeur de chaleur 160 peut permettre de refroidir davantage la fraction liquide provenant de la deuxième enceinte 130 ou bien de refroidir le liquide absorbant lors des phases de démarrage du système. Ainsi, il peut être utile pour certains liquides absorbants dont le refroidissement lors de l'étape 130 ne serait pas suffisant.

### [Exemples]

Les exemples suivants illustrent de façon non limitative la portée de l'invention.

### Exemple 1 : Traitement d'un flux de dépolymérisation de PHA avec un liquide absorbant riche en Benzène et Méthanol.

Le flux issu d'une unité de dépolymérisation de P3HP (Poly-3-Hydroxy-Propanoate) est composé notamment d'acide acrylique (AA), d'eau (H₂O) de gaz léger, de composés lourds, et de poussières de solides.

Le flux gazeux total de 21,8 kg/h, constitué notamment de 20 kg/h d'AA, 0,10 kg/h d'eau, de composés légers et de composés lourds. Ce flux est dirigé vers une colonne ou enceinte de condensation opérée à 98 kPa. L'effluent gazeux est injecté en pied de la colonne à une température de 260°C. Dans la colonne, ce flux est mis en contact avec le flux de liquide absorbant à l'aide d'un système à douche de pulvérisation. En tête de la colonne, les gaz légers sont lavés à contre-courant par des condensats produits par le refroidissement de ces gaz légers, ainsi que par un appoint de 10 kg/h de Méthanol, 20 kg/h de Benzène contenant aussi un appoint de phénothiazine.

En pied de colonne, le condensat est à 65 °C, la composition du flux de 367 kg/h correspond à 38 kg/h d'Acrylate de Méthyle (AM), 20 kg/h d'AA, 140 kg de MeOH (ΔHv°= 32,8 kJ/mole, Cp°L=81,1 J/mole/K), 150 kg/h de Benzène (ΔHv°= 33,8 kJ/mole, Cp°L=136,0 J/mole/K), 8 kg/h d'eau. Le flux contient environ 10 ppm (soit 4g/h) de phénothiazine. Le flux est envoyé sur un filtre presse afin d'éliminer les poussières entrainées lors de la dépolymérisation.

Le flux liquide est ensuite envoyé sur un réacteur d'estérification rempli de résine acide Amberlyst A36. Le réacteur est opéré en flux montant. La réaction d'estérification de l'acide acrylique présent est facilitée par le large excès de méthanol. En sortie de réaction, le flux contenant 63 kg/h d'AM et 13 kg/h d'eau est en envoyé dans une deuxième enceinte, ou évaporateur, permettant une vaporisation partielle, opérée à 10 kPa. L'évaporateur se présente sous la forme d'un cylindre vertical, équipé d'un diffuseur à sa base dont le rôle est de pulvériser le liquide dans la chambre, d'un dévésiculeur en tête dont le rôle est de coalescer les gouttelettes formant un brouillard dans la chambre afin de retourner dans la chambre le produit lourd qui aurait pu être entrainé avec les gaz de vaporisation.

Une fraction gazeuse légère contenant un flux riche en Méthanol et AM (ΔHv°= 29,2 kJ/mole, Cp°L= 158,8 J/mole/K) est produite. La fraction liquide à 35°C est alors réchauffée à 65 °C, et injectée dans un autre évaporateur adiabatique, opéré dans les mêmes conditions que le précédent. Les 2 flux légers issus des évaporateurs sont combinés, refroidis et redistillés afin de séparer le méthanol de l'AM et du benzène. Le méthanol et le benzène ainsi récupérés, contenant encore une fraction d'AM, sont renvoyés à l'unité d'absorption avec un complément de méthanol frais. L'AM purifié récupéré est stabilisé avec 200 mg/kg de MEHQ (MonomethyEther d'HydroQuinone).

La fraction lourde de la deuxième enceinte est à 35 °C. Cette fraction lourde contient environ 13 kg/h d'eau, 39 kg/h d'AM, 120 kg/h méthanol, 130 kg/h de benzène ainsi que des lourds. Cette fraction lourde contient des impuretés « lourdes » qui sont en partie éliminées par une adsorption sur silice. Le reste de la fraction lourde est retournée à la colonne de condensation.

### Exemple 2: Traitement d'un flux de dépolymérisation de Polypropiolactone avec un liquide absorbant riche en Xylène.

L'effluent gazeux issu d'une unité de dépolymérisation de Polypropiolactone présente un flux de 22,7 kg/h est composé notamment de 20 kg/h d'AA, 1 kg/h d'eau, de composés légers et de composés lourds. Ce flux est dirigé vers une colonne d'absorption (faisant office d'enceinte de condensation) opérée à 98 kPa. L'effluent gazeux est injecté en pied de la colonne à une température de 280°C. Dans la colonne, ce flux est mis en contact avec le liquide absorbant à l'aide d'un système à douche de pulvérisation. En tête de la colonne, les gaz légers sont lavés à contre-courant par des condensats produits par le refroidissement de ces gaz légers, ainsi que par un appoint de 10 kg/h de xylène, et aussi un appoint de phénothiazine.

En pied de colonne, le condensat est à 85°C, la composition du flux d'environ 300 kg/h correspond à 38 kg/h d'Acide Acrylique (ΔHv°= 53,1 kJ/mole, Cp°L= 145,7 J/mole/K), 250 kg de Xylène (ΔHv°= 44,2 kJ/mole, Cp°L= 181,5 J/mole/K), 5,7 kg/h d'eau. Le flux contient environ 10 ppm (soit 4g/h) de phénothiazine. Le flux est envoyé sur un filtre afin d'éliminer les poussières entrainées lors de la dépolymérisation.

Le flux est ensuite envoyé dans un évaporateur adiabatique opéré à 10 kPa.

Une fraction légère contenant un flux riche en Acide Acrylique et Xylène est produite. Le flux est ensuite purifié et le xylène est retourné à la colonne d'absorption.

La fraction lourde de l'évaporateur adiabatique est à 50 °C. Cette fraction lourde contient environ 19 kg/h d'AA, 240 kg/h de Xylène, 5 kg/h d'eau ainsi que des lourds. Cette fraction lourde contient des impuretés « lourdes » qui sont en partie éliminées par une purge pour déconcentrer la boucle.

### Exemple 3 : Traitement d'un flux de dépolymérisation de PMMA avec un liquide absorbant riche en Méthanol.

L'effluent gazeux issu d'une unité de dépolymérisation de PMMA est composé notamment de Méthacrylate de méthyle (MAM), d'acide méthacrylique (AMA), de méthanol (MeOH), d'eau (H₂O) de gaz léger, de composés lourds, et de poussières de solides.

Le flux total d'effluent gazeux de 30,5 kg/h, est constitué notamment de 14 kg/h de MAM, 0,50 kg/h d'eau, 0,9 kg de MeOH, 12 kg/h d'AMA. Ce flux est dirigé vers une enceinte de condensation ou colonne d'absorption opérée à 98 kPa. L'effluent gazeux est injecté en pied de la colonne à une température de 425°C. Dans la colonne, cet effluent gazeux est mis en contact avec le flux de liquide absorbant à l'aide d'un système à douche de pulvérisation. En tête de la colonne, les gaz légers sont lavés à contre-courant par des condensats produits par le refroidissement de ces gaz légers, ainsi que par un appoint de 57 kg/h de Méthanol, 10 kg/h MAM contenant aussi un appoint de phénothiazine.

En pied de colonne, le condensat est à 65°C, la composition du flux de 374 kg/h correspond à 79 kg/h de MAM (ΔHv°= 40,1 kJ/mole, Cp°L= 191,2 J/mole/K), 8,6 kg/h d'AMA, 257 kg de MeOH, 13 kg/h d'eau. Le flux contient environ 20 ppm (soit 8g/h) de phénothiazine. Le flux est envoyé sur un filtre presse afin d'éliminer les poussières entrainées lors de la dépolymérisation.

Le flux est ensuite envoyé sur un réacteur d'estérification rempli de résine acide Amberlyst A36. Le réacteur est opéré en flux montant. La réaction d'estérification de l'acide méthacrylique présent est facilitée par le large excès de méthanol présent. En sortie de réaction, le flux contenant 97 kg/h de MAM et 15,5 kg/h d'eau est envoyé dans une deuxième enceinte, un évaporateur adiabatique, opéré à 10 kPa.

Une fraction légère contenant un flux riche en Méthanol et MAM est produite, incluant l'azéotrope MAM-Méthanol (environ 82 % pds de méthanol, 64,2°C). La fraction liquide à 35 °C est alors réchauffée à 65 °C, et injectée dans un autre évaporateur adiabatique, opéré dans les mêmes conditions que le précédent. Les 2 flux légers issus des évaporateurs sont combinés, refroidis et redistillé afin de séparer le méthanol du MAM. Le méthanol ainsi récupéré, contenant encore une fraction de MAM, est renvoyé à l'unité d'absorption avec un complément de méthanol frais.

La fraction lourde de la deuxième enceinte est à 35 °C. Cette fraction lourde contient 11 kg/h d'eau, 69 kg/h de MAM, ainsi que des lourds et 196 kg/h méthanol. Cette fraction lourde contient des impuretés « lourdes » qui sont en partie éliminées par une adsorption sur silice.

### Exemple 4 : Traitement d'un flux de dépolymérisation de PMMA

Le flux issu d'une unité de dépolymérisation de PMMA est composé notamment de Méthacrylate de méthyle (MAM), d'acide méthacrylique (AMA), de méthanol (MeOH), d'eau (H₂O) de gaz léger, de composés lourds, et de poussières de solides.

L'effluent gazeux présente un flux total d'environ 22,4 kg/h, comportant notamment de 20,7 kg/h de MAM, 0,08 kg/h d'eau, 0,33 kg de MeOH, 0,9 kg/h d'AMA. Ce flux est dirigé vers une colonne de condensation opérée à 98 kPa. L'effluent gazeux est injecté en pied de la colonne à une température de 475 °C. Dans la colonne, ce flux est mis en contact avec le flux de liquide absorbant à l'aide d'un système à douche de pulvérisation. En tête de la colonne, les gaz légers sont lavés à contre-courant par des condensats produits par le refroidissement de ces gaz légers, ainsi que par un appoint de 0,3 kg/h d'eau.

En pied de colonne, le condensat est à 65 °C, la composition du flux de 403 kg/h correspond à 330 kg/h de MAM, 10 kg/h d'AMA, 3,2 kg de MeOH, 59 kg/h de monoxyde de dihidrogène. Le flux est envoyé sur un filtre presse afin d'éliminer les poussières entrainées lors de la dépolymérisation. Le flux est ensuite envoyé dans une deuxième enceinte, telle qu'un évaporateur adiabatique, opéré à 20 kPa. En sortie, une fraction légère contient un flux riche en MAM, de 34,4 kg. Cette fraction gazeuse est alors refroidie davantage à 35°C, et séparée par décantation. Un flux riche en MAM est alors isolé. L'autre fraction est retournée vers la colonne d'absorption.

La fraction lourde de la deuxième enceinte est à 45°C. Cette fraction lourde contient l'AMA, 54 kg/h de monoxyde de dihidrogène, 301 kg/h de MAM, ainsi que des lourds et du méthanol. Le flux est dirigé vers un lit de résine anionique pour piéger l'AMA alimenté en flux montant. La résine est régénérée périodiquement. Le flux sortant est renvoyé vers la colonne de condensation.

### Exemple 5 : Traitement de flux de dépolymérisation de PMMA

L'effluent gazeux, avec un flux total de 20,8 kg/h, constitué notamment de 20 kg/h de MAM, 0,03 kg/h d'eau, 0,07 kg de MeOH, 0,18 kg/h d'AMA. Cet effluent gazeux est dirigé vers une enceinte de condensation (ou colonne d'absorption) opérée à 98 kPa. L'effluent gazeux est injecté en pied de la colonne à une température de 420 °C. Dans la colonne, ce flux est mis en contact avec le flux de liquide absorbant (monoxyde de dihidrogène) à l'aide d'un système à douche de pulvérisation. En tête de la colonne, les gaz légers sont lavés à contre-courant par des condensats produits par le refroidissement de ces gaz légers, ainsi que par un appoint de 1,5 kg/h de Méthanol, 3 kg/h de monoxyde de dihidrogène ainsi qu'un appoint de phénothiazine.

En pied de colonne, le condensat est à 65 °C, la composition du flux de 294 kg/h correspond à 112 kg/h de MAM, 8,1 kg/h d'AMA, 1,4 kg de MeOH, 153 kg/h de monoxide de dihidrogène. Le flux contient environ 38 ppm (soit 11 g/h) de phénothiazine. Le flux est envoyé sur un filtre presse afin d'éliminer les poussières entrainées lors de la dépolymérisation.

Le pH du condensat est contrôlé par ajout de méthylate de sodium en amont dans le flux de liquide absorbant à environ 0,1 kg/h.

Le flux est ensuite envoyé dans un évaporateur adiabatique opéré à 20 kPa.

Une fraction légère de 25,2 kg/h contenant un flux riche en MAM est produite. Il est stabilisé par 200 mg/kg de MEHQ. Le MAM ainsi récupéré a une pureté supérieure à 98 %, et les deux impuretés majoritaires sont l'isobutyrate de méthyle (0,6 % pds) et l'acrylate d'éthyle (0,3 %). Le produit obtenu peut encore être purifié par une distillation complémentaire.

La fraction lourde de l'évaporateur adiabatique est à 45°C. Cette fraction lourde contient 150 kg/h de monoxde de dihydrgène, 92 kg/h de MAM, ainsi que des lourds et de l'acide méthacrylique sous forme de sel sodique.

Une purge de cette fraction lourde est effectuée avant de la renvoyer à l'enceinte de condensation afin de la déconcentrer en composés lourds et acide méthacrylique.

### Exemple 6 : Traitement d'un flux de vapeurs issues de la pyrolyse du Polystyrène

L'enceinte de condensation traite 20 kg/h d'effluent gazeux à 470°C venant d'une unité de pyrolyse. Le liquide absorbant comporte du benzène mais peut également contenir des composés organiques issus de l'effluent gazeux. La teneur en benzène est maintenue à 22 % massique. Le débit de liquide absorbant imposé pour permettre le refroidissement est de l'ordre de 1000 kg/h et la température de 69°C. Les produits majeurs sont 647 kg de styrène (monomère), 212,5 kg benzène, 23,2 kg de toluène, 70 kg TriMethyl Benzene (TMB), le reste est constitué de produits lourds.

Les fractions légères quittant l'enceinte de condensation par la sortie 113 sont condensées partiellement et le liquide peut être ajouté au flux de liquide absorbant.

La fraction lourde issue de la vaporisation partielle dans une deuxième enceinte telle qu'un évaporateur adiabatique est pompée, purifiée de façon à enlever les produits lourds et utilisée à nouveau dans l'enceinte de condensation. On retire une partie de solvant TMB et les produits les plus lourds tels le phénanthrène pour un total de l'ordre de 1,8 kg/h.

La fraction légère issue de la vaporisation partielle dans la deuxième enceinte est de l'ordre de 50 kg/h. Elle est partiellement condensée, puis purifiée de façon à générer une phase riche en benzène utilisée à nouveau dans l'enceinte de condensation. On produit ainsi 32,4 kg/h de phase riche en benzène à 95%, lequel est recyclé.

Le produit non recyclé, représentant 17,8 kg/h, est un mélange partiellement purifié comportant en majorité du styrène.

### Exemple 7 : Traitement d'un flux de dépolymérisation de PHA, obtenu par fermentation

Le flux issu d'une unité de dépolymérisation de P3HP (Poly-3-Hydroxy-Propanoate) est composé notamment d'acide acrylique (AA), d'eau (H₂O) de gaz léger, de composés lourds.

Le flux gazeux total de 23,5 kg/h, constitué notamment de 20 kg/h d'AA, 0,33 kg/h d'acide acétique, 0,10 kg/h d'eau, de composés légers (0,28 kg/h) et de composés lourds (2,8 kg/hr) constitués essentiellement d'oligomères. Ce flux est dirigé vers une colonne ou enceinte de condensation opérée à 110 kPa. L'effluent gazeux est injecté en pied de la colonne à une température de 250°C. Dans la colonne, ce flux est mis en contact avec le flux de liquide absorbant à l'aide d'un système à douche de pulvérisation. En tête de la colonne, les gaz légers sont lavés à contre-courant par des condensats produits par le refroidissement de ces gaz légers. L'essentiel des gaz légers produits à la pyrolyse sont éliminés à cette étape de condensation, en maintenant le flux d'absorption à une température suffisamment élevée.

En pied de colonne, le condensat est à 85 °C, la composition du flux de 260 kg/h correspond à 212 kg/h d'Acide Acrylique, 2,7 kg/h d'acide acétique (ΔHv°= 52,1 kJ/mole, Cp°L=123,3 J/mole/K), 0,15 kg/h d'eau et 45 kg/h de composés lourds. Le flux contient environ 10 ppm de phénothiazine. Le flux est envoyé sur un filtre presse afin d'éliminer les poussières entrainées lors de la dépolymérisation.

Le flux liquide est ensuite envoyé dans une deuxième enceinte, ou évaporateur, permettant une vaporisation partielle, opérée à 10 kPa. L'évaporateur se présente sous la forme d'un cylindre vertical, équipé d'un diffuseur à sa base dont le rôle est de pulvériser le liquide dans la chambre, d'un dévésiculeur en tête dont le rôle est de coalescer les gouttelettes formant un brouillard dans la chambre afin de retourner dans la chambre le produit lourd qui aurait pu être entrainé avec les gaz de vaporisation.

Une fraction gazeuse légère contenant un flux riche en Acide Acrylique est produite. L'Acide acrylique (19 kg/h) récupéré est stabilisé avec 200 mg/kg de MEHQ (MonomethyEther d'HydroQuinone).

La fraction lourde de la deuxième enceinte est à 55 °C. Cette fraction lourde contient environ 190 kg/h d'Acide acrylique, 2,5 kg/h d'acide acétique, ainsi que des lourds (45 kg/h). Cette fraction lourde contient des impuretés « lourdes » qui sont essentiellement des oligomères de l'acide acrylique. Un soutirage d'environ 6 % de la fraction lourde est effectuée, afin de déconcentrer la boucle en produits lourds. L'effluent riche en acide acrylique et oligomères est retourné au réacteur de pyrolyse de PHA afin de compléter la dépolymérisation. Le reste de la fraction lourde, stabilisé par un complément de phénothiazine, est retournée à la colonne de condensation.

## Revendications

1. Procédé (200) de traitement d'un effluent gazeux issu d'une décomposition pyrolytique d'un polymère ou d'un mélange de polymères, permettant de récupérer un ou plusieurs monomère(s) contenu(s) dans ledit effluent gazeux, ledit procédé étant **caractérisé en ce qu'**il comprend les étapes suivantes :
- une étape de condensation (210) consistant à injecter, dans une enceinte de condensation (110) maintenue sous une première pression p₁ comprise entre 0,1 et 5 bars, l'effluent gazeux et à le mettre au contact d'un liquide absorbant, la température dudit liquide absorbant étant inférieure d'au moins 50°C et d'au plus 450°C à la température de l'effluent gazeux, afin que le(s)dit(s) monomère(s) se condense(nt) dans le liquide absorbant par échange thermique,
- une étape de vaporisation partielle (230) du condensat obtenu à l'issue de l'étape de condensation, par détente du condensat dans une enceinte (130) maintenue sous une deuxième pression p₂, inférieure à la première pression p₁, ladite deuxième pression p₂ est comprise entre 0,001 et 0,8 bars, la différence de pression en valeur absolue entre la première enceinte de condensation (110) et la deuxième enceinte (130) étant supérieure ou égale à 0,5 bars,
- une étape de réinjection (240) consistant à rediriger, au moins en partie, une première fraction, liquide ou vapeur, obtenue à l'issue de l'étape de vaporisation partielle (230) vers l'enceinte de condensation (110) pour absorber à nouveau le(s) monomère(s) contenu dans l'effluent gazeux, et
- une étape de récupération (250) comportant une purification d'une seconde fraction, liquide ou vapeur, obtenue à l'issue de l'étape de vaporisation partielle (230) et chargée en monomère(s)
**caractérisé en ce que** le polymère est sélectionné parmi : les polyéthylènes comme le polyéthylène haute densité (PEHD) ou le polyéthylène téréphtalate (PET) ; d'un homo- et copolymère d'oléfines tels que les copolymères acrylonitrile-butadiène-styrène, les copolymères styrène-butadiène-méthacrylate d'alkyle (ou SBM) ; le polypropylène, le polybutadiène et le polybutylène; les homo- et copolymères acryliques et les polyméthacrylates d'alkyles tels que le poly(méthacrylate de méthyle) ; un polyhydroxyalkanoate ; les homo- et copolyamides ; les polycarbonates ; les polyesters dont le poly(téréphtalate d'éthylène) et le poly(téréphtalate de butylène) ; les polyéthers tels que le poly(phénylène éther), le poly(oxyméthylène), le poly(oxyéthylène) ou poly(éthylène glycol) et le poly(oxypropylène) ; le polystyrène ; les copolymères de styrène et d'anhydride maléique ; le poly(chlorure de vinyle) ; les polymères fluorés tels que le poly(fluorure de vinylidène), le polytétrafluorure d'éthylène et le polychlorotrifluoro-éthylène ; les caoutchoucs naturels ou synthétiques ; les polyuréthanes thermoplastiques ; les polyaryl éther cétones (PAEK) tels que la polyétheréthercétone (PEEK) et la polyéther cétone cétone (PEKK) ; le polyétherimide ; la polysulfone le poly(sulfure de phénylène) ; l'acétate de cellulose ; le poly(acétate de vinyle) ; le polypropiolactone ou un mélange de deux ou plusieurs de ces polymères .

2. Procédé selon la revendication 1, **caractérisé en ce que** l'étape de récupération (250) comporte une condensation de la fraction vapeur obtenue à l'issue de l'étape de vaporisation partielle 230 si la seconde fraction chargée en monomère(s) est une fraction vapeur.

3. Procédé selon la revendication 1, **caractérisé en ce que** l'étape de récupération (250) comporte une filtration ou une décantation de la fraction liquide obtenue à l'issue de l'étape de vaporisation partielle 230 si la seconde fraction chargée en monomère(s) est une fraction liquide.

4. Procédé selon l'une quelconque des revendications précédentes, **caractérisé en ce que** lors de l'étape de réinjection (240), la première fraction réinjectée est une fraction liquide et lors de l'étape de récupération (250), la seconde fraction récupérée est une fraction vapeur.

5. Procédé selon l'une quelconque des revendications précédentes, **caractérisé en ce que** le liquide absorbant est sélectionné de sorte que le rapport entre sa chaleur latente de vaporisation ΔHv à l'état standard et sa chaleur spécifique molaire Cp à l'état standard soit supérieur à celui du(des) monomère(s) à récupérer.

6. Procédé selon l'une quelconque des revendications précédentes, **caractérisé en ce que** le liquide absorbant est choisi parmi l'un des composés suivants : le benzène, le benzonitrile, un composé de formule R-COOH, et un composé de formule R-OH, dans lesquels R peut être choisi parmi des alkyles, dont le nombre de carbone est compris entre 1 et 5, un phényl ou un hydrogène ; et avantageusement le liquide absorbant est choisi parmi l'un des composés suivants : le liquide absorbant est choisi parmi l'un des composés suivants : un composé de formule R-OH, un composé de formule R-COOH, dans lesquels R peut être choisi parmi des alkyles, dont le nombre de carbones est compris entre 1 et 5, ou un hydrogène.

7. Procédé selon l'une quelconque des revendications précédentes, **caractérisé en ce que** le liquide absorbant est choisi parmi le monoxyde de dihydrogène, le méthanol, l'éthanol, le propanol, butanol, l'acide formique, l'acide acétique ou leurs mélanges

8. Procédé selon l'une quelconque des revendications précédentes, **caractérisé en ce que** le liquide absorbant est choisi de sorte que son point d'ébullition soit de l'ordre de grandeur de celui du(des) monomère(s) à récupérer ± 80°C et préférablement le liquide absorbant présente un point d'ébullition supérieur ou sensiblement égal à celui du(des) monomère(s) à récupérer et/ou de l'azéotrope qu'il forme avec le ou les monomère(s) à récupérer.

9. Procédé selon l'une quelconque des revendications précédentes, **caractérisé en ce que** le ou les monomère(s) sont sélectionné(s) parmi les composés suivants : méthacrylate de méthyle, acrylate de méthyle, acrylate d'éthyle, acide acrylique, acide méthacrylique, styrène, acide crotonique, gamma-butyrolactone, delta-valerolactone et leurs mélanges.

10. Procédé selon l'une quelconque des revendications précédentes, **caractérisé en ce que** l'injection de l'effluent gazeux lors de l'étape de condensation (210) est réalisée à co-courant ou à contrecourant du liquide absorbant.

11. Procédé selon l'une quelconque des revendications précédentes, **caractérisé en ce qu'**il comporte en outre une étape de séparation (220) sur le condensat obtenu à l'issue de l'étape de condensation avant l'étape de vaporisation partielle (230) ou **caractérisé en ce qu'**il comporte en outre une étape d'ajustement de la température (260) de la fraction redirigée vers l'enceinte de condensation (110) pour absorber à nouveau le(s) monomère(s) contenu dans l'effluent gazeux.

12. Procédé selon l'une quelconque des revendications précédentes, caractérisé en ce soit qu'au moment de l'étape de condensation (210), des additifs sont ajoutés dans le liquide absorbant, lesdits additifs étant choisis parmi des inhibiteurs de polymérisation ou qu'au moment de l'étape de vaporisation partielle (230), des additifs sont ajoutés dans le circuit, lesdits additifs étant choisis parmi des inhibiteurs de polymérisation.

13. Système de traitement d'un effluent gazeux issu d'une décomposition pyrolytique d'un polymère ou d'un mélange de polymères, permettant de récupérer un ou plusieurs monomère(s) contenu(s) dans ledit effluent gazeux, ledit système étant **caractérisé en ce qu'**il comprend :
- une enceinte (110) de condensation apte à être maintenue sous une première pression p₁ comprise entre 0.1 et 5 bars, ladite enceinte comprenant, dans sa paroi latérale, un orifice (111) d'entrée de l'effluent gazeux et un dispositif d'absorption (112) apte à permettre une mise en contact dudit effluent gazeux avec un liquide absorbant dont la température est inférieure d'au moins 50°C et au plus 450°C à celle de l'effluent gazeux, ladite enceinte comprenant en outre un orifice (113) de sortie de gaz à son extrémité supérieure et un orifice (114) de sortie du condensat obtenu, dans sa partie inférieure,
- une deuxième enceinte (130) en communication fluidique avec l'enceinte (110) de condensation et destinée à accueillir le condensat obtenu à l'issue de l'étape de condensation, ladite deuxième enceinte (130) étant apte à être maintenue à une deuxième pression p₂ inférieure à la première pression p₁, ladite deuxième pression p₂ est comprise entre 0.001 et 0.8bars, la différence de pression en valeur absolue entre la première enceinte de condensation et la deuxième enceinte étant supérieur ou égale à 0.5bars, de manière à provoquer la détente du condensat et sa vaporisation partielle adiabatique,
- une pompe (140) permettant de récupérer une fraction issue de la deuxième enceinte (130) pour la réinjecter dans la première enceinte (110) de condensation via le dispositif d'absorption (112) .

14. Système selon la revendication 13, **caractérisé en ce qu'**il comprend en outre un échangeur de chaleur (131), disposé en aval de la deuxième enceinte (130), permettant de condenser la fraction gazeuse issue de la vaporisation partielle provoquée par la détente du condensat dans la deuxième enceinte (130), et un moyen de purification (150) des constituants de ladite fraction gazeuse condensée.

15. Système selon la revendication 13 ou 14, **caractérisé en ce qu'**il comprend en outre un dispositif de séparation (120), disposé en amont de la deuxième enceinte (130), de préférence apte à séparer des composés par filtration, décantation, centrifugation ou estérification.

16. Système selon l'une des revendications précédentes, **caractérisé en ce qu'**il comprend en outre un échangeur de chaleur (160) en amont de la première enceinte (110) apte à ajuster la température de la fraction liquide issue de la deuxième enceinte (130) avant son injection dans la première enceinte (110) ou **caractérisé en ce qu'**il comprend en outre un dispositif de purification (170), disposé en aval de la deuxième enceinte (130), apte à purifier une partie de la fraction liquide issue de la deuxième enceinte (130) ou **caractérisé en ce qu'**il comprend en outre un point d'injection (116) de liquide absorbant.
